# EUROPÄISCHE PATENTANMELDUNG

(11) **EP 2 395 235 A2**
(43) Veröffentlichungstag der Anmeldung: **14.12.2011**
(21) Anmeldenummer: 11001402.4
(22) Anmeldetag: 21.02.2011
(51) Int. Cl.: F03D 1/04

(54) **Windkraftanlage mit tropfenförmigem Gehäuse**

(30) Priorität: 11.06.2010 DE 102010017343
(71) Anmelder: Dr. Ing. h.c. F. Porsche AG, 70435 Stuttgart (DE)
(72) Erfinder: Aussem, Thomas, 71106 Magstadt (DE); Koestner, Matthias, 74343 Sachsenheim (DE); Krestel, Richard, 71229 Leonberg (DE)

(57) **Zusammenfassung**

Strömungsenergieanlage (1, 1', 1"), insbesondere Windkraftanlage, mit einem um dessen senkrechter Achse in Strömungsrichtung, insbesondere Windrichtung fluchtend verstellbaren, im Querschnitt tropfenförmigen Gehäuse (2, 2'), wobei das Gehäuse (2, 2') vorderseitig eine Einlassöffnung (3, 3') zu einem inneren Strömungskanal (6, 6') aufweist, der zu zumindest einer, insbesondere seitlich am Gehäuse angeordneten Auslassöffnung (4, 5) führt und wenigstens ein axial angeströmter Propeller (10, 10', 10", 10"') in dem Strömungskanal (6, 6') angeordnet ist, wobei der Strömungskanal (6, 6') in seinem sich an die Einlassöffnung (3, 3') anschließenden Einlassbereich konvex verlaufende Begrenzungsflächen (18, 18', 19, 19') aufweist.

## Beschreibung

Die Erfindung betrifft eine Strömungsenergieanlage, insbesondere Windkraftanlage, gemäß Anspruch 1.

Windkraftanlagen sind aus dem Stand der Technik bekannt. Eine Windkraftanlage wandelt die kinetische Energie des Windes in elektrische Energie um und speist sie in das Stromnetz ein. Dies geschieht, indem die Bewegungsenergie der Windströmung auf die Rotorblätter wirkt und somit den Rotor in eine Drehbewegung versetzt. Der Rotor gibt die Rotationsenergie an einen Generator weiter, die dort in elektrische Energie umgewandelt wird.

Aus der DE 8434578 U1 ist eine Windkraftanlage bekannt, bei der zwei zylindrische Schaufelrotoren im Abstand voneinander angeordnet sind und die Achsen der Schaufelrotoren vertikal verlaufen. Die Schaufelrotoren sind in einem tropfenförmigen Gehäuse untergebracht, das aus drei Teilen besteht. Während die beiden vorderen Teile die Schaufelrotoren aufnehmen bildet der dritte Teil mit seinem hinteren Ende eine Windfahne. Zwischen den beiden vorderen Teilen ist ein Windkanal mit einer schlitzförmigen Einlassöffnung gebildet, in den die Schaufelrotoren eintauchen. Stromab teilt sich der Windkanal an einer vorderen keilförmigen Spitze des dritten Gehäuseteils in zwei Zweigkanäle, die zu schlitzförmigen Auslassöffnungen zwischen den ersten beiden Gehäsuseteilen und dem dritten Gehäuseteil führen.

Die aus dem Stand der Technik bekannten Strömungsenergieanlagen lassen jedoch noch Wünsche offen, so dass der vorliegenden Erfindung die Aufgabe zu Grunde liegt, eine neuartige Strömungsenergieanlage mit verbesserten Leistungswerten bei gleichzeitig einfachem konstruktiven Aufbau zu schaffen.

Diese Aufgabe wird durch eine Strömungsenergieanlage gemäß Anspruch 1 gelöst. Weitere vorteilhafte Merkmale beinhalten die Unteransprüche.

Erfindungsgemäß ist die Strömungsenergieanlage, insbesondere Windkraftanlage, mit einem um dessen senkrechte Achse in Strömungsrichtung, insbesondere Windrichtung, verstellbaren, im Querschnitt tropfenförmigen Gehäuse versehen. Am Gehäuse ist eine vorderseitige Einlassöffnung eines inneren Strömungskanals vorgesehen, der zu zumindest einer, insbesondere seitlichen Auslassöffnung führt und mit einem axial angeströmtem Propeller versehen ist. Der Strömungskanal weist in seinem Einlassbereich konvex verlaufende Begrenzungsflächen auf. Die axiale Anströmung der Propeller in Verbindung mit den konvex verlaufenden Begrenzungsflächen bewirkt eine erhebliche Leistungssteigerung im Vergleich zu bekannten Windkraftanlagen mit beispielsweise gerade ausgeformten Einlassschlitzen, da die konvex verlaufenden Begrenzungsflächen eine Beschleunigung der Luft in der Rotorebene bewirken. Der tropfenförmige Grundkörper richtet sich aufgrund seiner aerodynamischen Form immer in Windrichtung aus. Die tropfenförmige Grundform bewirkt einen möglichst kleinen Widerstand. Es ist anzumerken, dass der hintere Bereich des tropfenförmigen Gehäuses nicht spitz zulaufen muss sondern auch abgeschnitten sein kann, um eine kürzere Bauform zu erreichen.

Eine Ausführungsform sieht vor, dass die Strömungsenergieanlage einen einzigen, vorzugsweise zentral, an der Vorderseite des tropfenförmigen Gehäuses beginnenden und anschließend zu zwei abzweigenden Auslasskanälen mit seitlichen Auslassöffnungen führenden Strömungskanal aufweisen kann. Die Auslasskanäle erstrecken sich ausgehend vom Strömungskanal gleichmäßig nach außen und münden in der jeweils seitlichen Gehäusewandung in zugehörigen Auslassöffnungen. Durch die tropfenförmige Grundform des Gehäuses kann der zentral angeordnete Strömungskanal (Lufteinlasskanal) optimal in den Wind bzw. in Strömungsrichtung ausgerichtet werden. Die Ausrichtung in Windrichtung geschieht hierbei selbstständig, wenn die senkrechte Achse, um die sich das Gehäuse drehen kann, vor dem aerodynamischen Schwerpunkt in der Seitenansicht angeordnet ist. Alternativ oder ergänzend kann die Drehung des Gehäuses auch zwangsgeführt (z.B. über einen motorischen Antrieb) erfolgen.

Vorzugsweise ist zumindest ein Propeller innerhalb des Strömungskanals an der engsten Stelle der konvex verlaufenden Begrenzungsflächen angeordnet, so dass eine möglichst hohe Strömungsgeschwindigkeit erzielt wird. Der Propeller ist dabei so innerhalb des Strömungskanals angeordnet, dass eine vollständige und vollflächige Beaufschlagung der Rotorblätter durch die Luftströmung gewährleistet werden kann. Der Propeller kann beispielsweise auf einem separaten Haltegestell gelagert und/oder mittels Befestigungs-oder Stützstreben an einer Umgebungsstruktur innerhalb des Gehäuses befestigt sein.

Eine weitere Ausführungsform sieht vor, dass zumindest je ein Propeller in den abzweigenden Auslasskanälen angeordnet sein kann. Auch in diesem Fall sind der Einlasskanal und die Auslasskanäle so ausgeführt, dass sich die Propeller im bereich des kleinsten Gesamtquerschnittes und damit der höchsten Strömungsgeschwindigkeit befinden.

Der Propeller ist vorzugsweise in Form eines axial angeströmten, zentrisch in dem jeweiligen Strömungskanal und/oder Auslasskanal angeordneten Axial-Lüfterrads ausgebildet sein. Die Vorteile eines Axial-Lüfterrads sind die, im Verhältnis zum hohen geförderten Luftdurchsatz, geringen Abmessungen. Die Drehachse des Axial-Lüfterrads verläuft parallel zum Luftstrom.

Beide Ausführungsformen können in Gehäusen untergebracht sein, die in Form von zusammenfügbaren Modulen ausgebildet, die dann eine Einheit bilden. Somit kann eine einfache Leistungserweiterung bzw. Skalierung der Strömungsenergieanlage durch Hinzufügen einzelner Module realisiert werden. Grundsätzlich können die miteinander kombinierbaren Module auch von einander abweichende Leistungswerte aufweisen. Vorzugsweise sind die Module so ausgebildet, dass sie zu Stapeln zusammengefügt werden können. Hierzu kann beispielsweise ein durchgehender Mast vorgesehen sein, af den die Module aufgesteckt werden und der gleichzeitig die senkrechte Achse aller Module bildet. Es sind auch Koppelelemente denkbar, die jeweils zwei Module miteinander verbinden. Vorzugsweise aber sind die Module hierfür dazu mit entsprechenden, koppelbaren Flächenabschnitte versehen, die formkomplementär zueinander ausgebildet sind. So können die Module eine gerade Ober- und/oder Unterseite aufweisen oder aber einerseits mit Erhöhungen und andererseits mit dazu formkomplementär ausgebildeten Aufnahmen versehen sein.

Eine bevorzugte Ausführungsform sieht vor, dass die Energieerzeugungseinheiten mehrerer zusammengefügter Module untereinander gekoppelt sein können. Unter Energieerzeugungseinheit ist hierbei nachfolgend der funktionale Zusammenschluss von zumindest einer auf das Axial-Lüfterrad folgenden Getriebe- und Generatoreinheit und Leistungselektronik oder einem Teilbereich hieraus zu verstehen.

Zur leistungsseitigen Kopplung der zusammengefügten Module können die innerhalb der einzelnen Module vorgesehenen Energieerzeugungseinheiten über elektrische Verbindungen mit einer zentralen Leistungselektronik gekoppelt sein. Die Leistungselektronik ermöglicht beispielsweise die Umformung der erzeugten elektrischen Energie in Bezug auf Spannungsform, Spannungshöhe sowie der Frequenz. Diese Art der Kopplung ist besonders einfach und betriebssicher, da jedes Modul für sich autark elektrische Leistung erzeugt.

Alternativ kann die leistungsseitige Kopplung der zusammengefügten Module, vorzugsweise innerhalb eines Stapels, durch mechanische Kopplung der Module auf eine gemeinsame Energieerzeugungseinheit, insbesondere eine zentrale Generatoreinheit, vorgesehen sein. Die Getriebeeinheiten können je nach Betriebsbedingungen entweder in den einzelnen Modulen oder ebenfalls zentral zusammen mit der Generatoreinheit angeordnet sein. Diese Art der Kopplung bietet Vorteile im Hinblick auf Gewicht und ggf. auch Wirkungsgrad.

Die zusammengefügten Module können dabei als Einheit auf einem Mast angeordnet sein, der mit der senkrechten Achse für die einzelnen Gehäuse korrespondieren sollte. Wenn es die Anströmung erlaub, beispielsweise bei der Anordnung auf einer höher gelegenen Fläche wie einem Dach, können die zusammengefügten Module auch direkt auf einem Sockel drehbar gelagert sein.

Die Module bzw. Stapel können in vielfältiger Weise verwendet werden. Neben der freien Aufstellung als Strömungsenergieanlage, entweder auf dem Boden, auf einem Dach oder auf einem Mast, können insbesondere die Stapel auch dekorativ verwendet werden. So ist eine Nutzung als Werbeträger möglich. Oder es kann vorgesehen sein, die Strömungsenergieanlage auf einem Schiff als (blinden) Schiffsschornstein anzubringen.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung beschrieben ist. Dabei können die in den Ansprüchen und in der Beschreibung erwähnten Merkmale jeweils einzeln für sich oder in beliebiger Kombination erfindungswesentlich sein.

Es zeigen:
- Fig. 1: die perspektivische Ansicht einer schematisch dargestellten erfindungsgemäßen Strömungsenergieanlage;
- Fig. 2: die Strömungsenergieanlage gem. Fig. 1 in einer schematisch dargestellten Schnittansicht;
- Fig. 3: eine weitere Ausführungsform einer Strömungsenergieanlage in Schnittansicht;
- Fig. 4: eine weitere Ausführungsform einer Strömungsenergieanlage in perspektivischer Ansicht;
- Fig. 5: die Strömungsenergieanlage gem. Fig. 4 in Schnittansicht; und
- Fig. 6: mehrere zu einem Stapel zusammengefasste Einzelmodule.

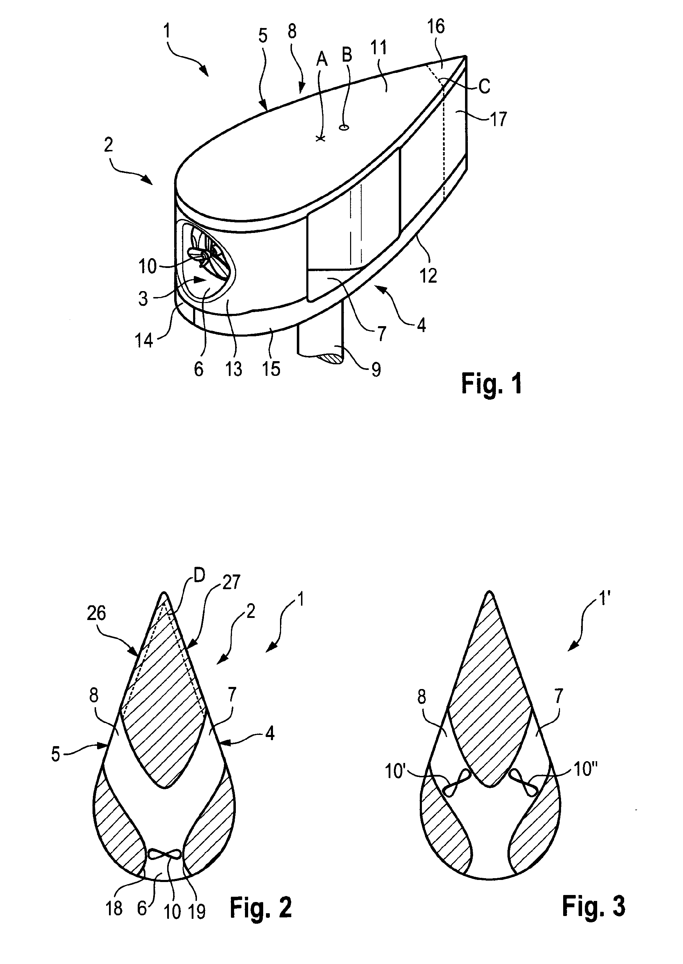

Fig. 1 zeigt die perspektivische Ansicht einer schematisch dargestellten Strömungsenergieanlage 1. Die Strömungsenergieanlage 1 weist ein im Querschnitt tropfenförmiges Gehäuse 2 auf, wobei im tropfenförmigen Gehäuse 2 eine vorderseitige Einlassöffnung 3 sowie seitliche Auslassöffnungen 4, 5 (nur 4 sichtbar) vorgesehen sind.

An die vordere Einlassöffnung 3 schließt ein Strömungskanal 6 an, wobei sich ausgehend vom Strömungskanal 6 zwei in den seitlichen Auslassöffnungen 4, 5 mündende Auslasskanäle 7, 8 innerhalb des Gehäuses 2 erstrecken. Innerhalb des Strömungskanals 6 ist ein Axial-Lüfterrad 10 (Propeller) angeordnet, wobei der Durchmesser des Axial-Lüfterrads 10 zumindest geringfügig kleiner als der Durchmesser des Strömungskanals 6 ist.

Das Gehäuse 2 hat eine gerade Ober- und Unterseite 11, 12 und ist somit grundsätzlich stapelbar ausgeführt. Das Gehäuse 2 weist einen im Wesentlichen einteiligen Grundköper 13 sowie daran befestigbare Bodenplatten 14, 15 sowie eine Deckenplatte 16 auf. Das Gehäuse 2 ist somit mehrteilig aufgebaut. Beispielsweise kann der hintere Bereich 17 des Gehäuses 2 als Hohlraum ausgebildet sein, wobei in dem Hohlraum beispielsweise die Getriebe- und/oder Generatoreinheiten zum Antrieb des Axial-Lüfterrads 10 angeordnet sein können. Das Gehäuse 2 ist drehbar gelagert auf einem Mast 9 angeordnet und weist einen tropfenförmigen Querschnitt auf. Eine senkrechte Achse A, um die sich das Gehäuse 2 drehen kann, ist dabei vor dem aerodynamischen Schwerpunkt B in der Seitenansicht angeordnet, so dass sich das Gehäuse 2 bei Strömungsbeaufschlagung selbstständig zur Luftströmung hin ausrichtet. Dabei muss das Gehäuse 2 in seinem zulaufenden Endbereich nicht keilförmig ausgebildet sein, sondern kann auch, wie mit einer strichlierten Linie C angedeutet, abgeschnitten sein, um eine kürzere Bauform zu erreichen.

Fig. 2 zeigt die Strömungsenergieanlage 1 in einer schematisch dargestellten Schnittansicht. Vom Strömungskanal 6 zweigen die Auslasskanäle 7, 8 ab und münden unter Ausbildung der Auslassöffnungen 4, 5 in den seitlichen Bereichen des Gehäuses 2. Der Strömungskanal 6 weist in seinem Einlassbereich konvex verlaufende Begrenzungsflächen 18, 19 auf, wobei die konvexen Begrenzungsflächen 18, 19 zu einem verbesserten Strömungsverhalten der in den Strömungskanal 6 eintretenden Luft führen. Hinter dem Axial-Lüfterrad 10 verteilt sich die Luft diffusorartig in die Auslasskanäle 7 und 8.

An die Auslassöffnungen 4, 5 können sich auch, wie durch die Linie D angedeutet, offene Auslasskanäle 26, 27 erstrecken, die in den seitlichen Bereichen des Gehäuses 2 eingeformt sind und nach oben und unten durch die Ober- und Unterseite 11, 12 begrenzt sind.

Fig. 3 zeigt eine weitere Ausführungsform einer Strömungsenergieanlage 1' in Schnittansicht. Die Strömungsenergieanlage 1' weist eine im Wesentlichen identische Bauform bzw. Ausgestaltung zu der Strömungsenergieanlage 1 gemäß Fig. 1 auf, jedoch mit dem Unterschied, dass zwei jeweils in einem Auslasskanal 7, 8 angeordnete Axial-Lüfterräder 10', 10" vorgesehen sind.

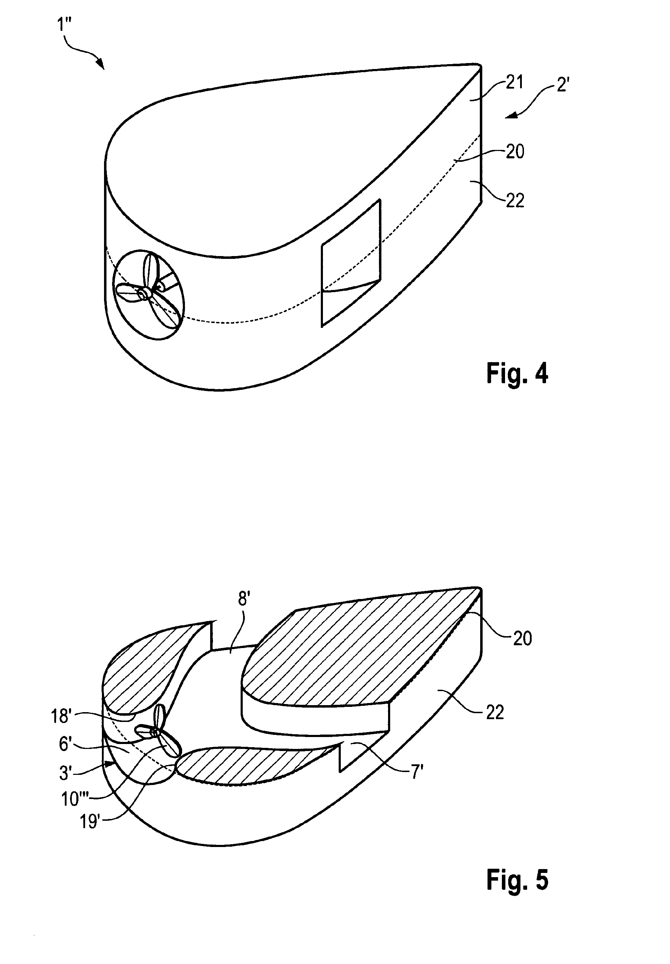

Fig. 4 zeigt eine weitere Ausführungsform einer Strömungsenergieanlage 1", wobei die Strömungsenergieanlage 1" u.a. ein Gehäuse 2' umfasst, welches eine horizontal verlaufende im Wesentlichen mittige Trennebene 20 aufweist. Das Gehäuse besteht somit im Wesentlichen aus einem Ober- und einem Unterteil 21, 22. Der funktionsbedingte Aufbau bzw. das Wirkprinzip entsprechen der Strömungsenergieanlage 1 gem. Fig. 1.

Fig. 5 zeigt die Schnittansicht zur weiteren Ausführungsform nach Fig. 4 auf das in der Trennebene 20 getrennte Unterteil 22. Deutlich zu erkennen sind der Strömungskanal 6' sowie die Auslasskanäle 7', 8' sowie das im Strömungskanal 6' angeordnete Axial-Lüfterrad 10"'. Der Einlassbereich um die Einlassöffnung 3' weist ebenfalls konvex verlaufende Begrenzungsflächen 18', 19' auf.

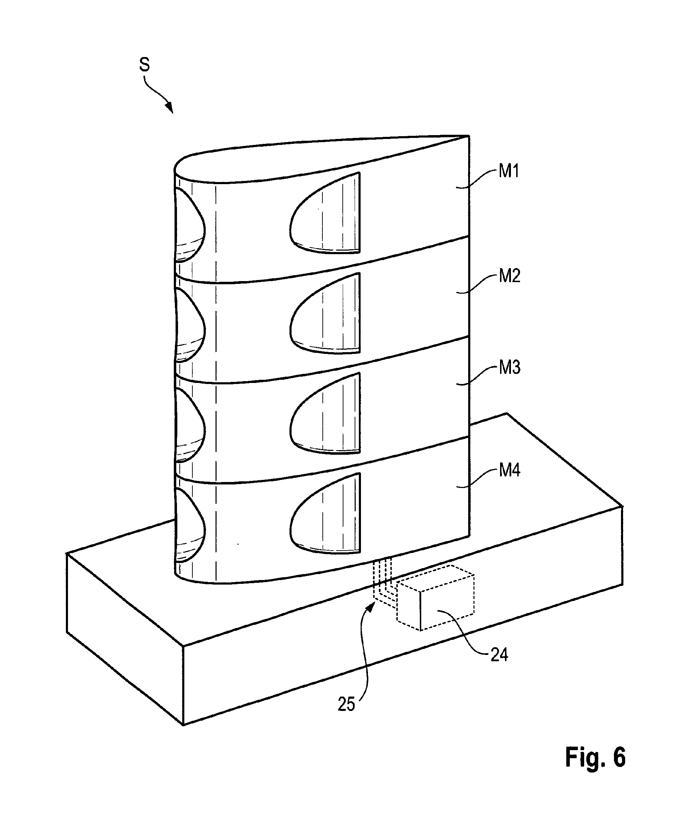

Fig. 6 zeigt mehrere zu einem Stapel S zusammengefasste Module M1, M2, M3, M4. Jedes Modul M1, M2, M3, M4 ist als eigenständige Strömungsenergieanlage ausgebildet, wobei unter dem Begriff Modul der funktionale Zusammenschluss von Gehäuse und Energieerzeugungseinheit zu verstehen ist. Der Stapel S ist drehbar auf einem Sockel 23 gelagert, der eine Leistungselektronik 24 aufnimmt. Jedes Modul M1, M2, M3, M4 ist über elektrische Leitungen 25 mit der Leistungselektronik 24 verbunden, die ausgangsseitig an ein nicht gezeigtes Stromnetz angeschlossen ist.

### Bezugszeichenliste

- 1: Strömungsenergieanlage
- 2: Gehäuse
- 3: Einlassöffnung
- 4: Auslassöffnung
- 5: Auslassöffnung
- 6: Strömungskanal
- 7: Auslasskanal
- 8: Auslasskanal
- 9: Mast
- 10: Axial-Lüfterrad (Propeller)
- 11: Oberseite
- 12: Unterseite
- 13: Grundköper
- 14: Bodenplatte
- 15: Bodenplatte
- 16: Deckenplatte
- 17: hinterer Bereich
- 18: konvex verlaufende Begrenzungsfläche
- 19: konvex verlaufende Begrenzungsfläche
- 20: Trennebene
- 21: Oberteil
- 22: Unterteil
- 23: Sockel
- 24: Leistungselektronik
- 25: elektrische Leitung
- 26: Auslasskanal
- 27: Auslasskanal
- A: senkrechte Achse
- B: aerodynamischer Schwerpunkt
- C: Linie
- D: Linie
- M1: Modul
- M2: Modul
- M3: Modul
- M4: Modul
- S: Stapel

## Patentansprüche

1. Strömungsenergieanlage (1, 1', 1"), insbesondere Windkraftanlage, mit einem um dessen senkrechter Achse in Strömungsrichtung, insbesondere Windrichtung fluchtend verstellbaren, im Querschnitt tropfenförmigen Gehäuse (2, 2'), wobei das Gehäuse (2, 2') vorderseitig eine Einlassöffnung (3, 3') zu einem inneren Strömungskanal (6, 6') aufweist, der zu zumindest einer, insbesondere seitlich am Gehäuse angeordneten Auslassöffnung (4, 5) führt und wenigstens ein axial angeströmter Propeller (10, 10', 10", 10"') in dem Strömungskanal (6, 6') angeordnet ist, wobei der Strömungskanal (6, 6') in seinem sich an die Einlassöffnung (3, 3') anschließenden Einlassbereich konvex verlaufende Begrenzungsflächen (18, 18', 19, 19') aufweist.

2. Strömungsenergieanlage nach Anspruch 1, **gekennzeichnet durch** einen einzigen, vorzugsweise zentral an der Vorderseite des tropfenförmigen Gehäuses (2, 2') beginnenden und anschließend zu zwei abzweigenden Auslasskanälen (7, 7', 8, 8') mit seitlichen Auslassöffnungen (4, 5) führenden Strömungskanal (6, 6').

3. Strömungsenergieanlage nach Anspruch 2, **gekennzeichnet durch** sich an die seitlichen Auslassöffnungen (4, 5) in Strömungsrichtung anschließende offenen Auslasskanäle (26, 27) aussenseits am Gehäuse (2, 2').

4. Strömungsenergieanlage nach Anspruch 1, 2 oder 3, **gekennzeichnet durch** einen Propeller (10, 10', 10", 10"') in dem Strömungskanal (6, 6') im Bereich der abzweigenden Auslasskanäle (7, 7', 8, 8').

5. Strömungsenergieanlage nach zumindest einem der Ansprüche 1 bis 4, **gekennzeichnet durch** die Anordnung des Propellers (10, 10', 10", 10"') im engsten Gesamtquerschnitt des Strömungskanals (6, 6').

6. Strömungsenergieanlage nach zumindest einem der Ansprüche 1 bis 5, **gekennzeichnet durch** zumindest je einen Propeller (10, 10', 10", 10"') in den abzweigenden Auslasskanälen (7, 7', 8, 8').

7. Strömungsenergieanlage nach zumindest einem der Ansprüche 1 bis 6, **gekennzeichnet durch** einen Propeller (10, 10', 10", 10"') in Form eines axial angeströmten, zentrisch in dem jeweiligen Strömungskanal und/oder Auslasskanal angeordneten Axial-Lüfterrads.

8. Strömungsenergieanlage nach zumindest einem der Ansprüche 1 bis 7, **gekennzeichnet durch** mehrere zu Mehrfach-Energieerzeugungseinheiten zusammenfügbaren Gehäusen, wobei jedes Gehäuse im funktionalen Zusammenschluss mit einer Energieerzeugungseinheit ein separates Modul ausbildet.

9. Strömungsenergieanlage nach zumindest einem der Ansprüche 1 bis 8, **gekennzeichnet durch** mit zu Stapeln zusammensteckbaren Modulen (M1, M2, M3, M4).

10. Strömungsenergieanlage nach zumindest einem der Ansprüche 1 bis 9, **gekennzeichnet durch** mehrere Energieerzeugungseinheiten zumindest teilweise funktionale zusammengeschlossen sind.

11. Strömungsenergieanlage nach einem der Ansprüche 8 bis 9, **gekennzeichnet durch** innerhalb der Module (M1, M2, M3, M4) angeordnete Energieerzeugungseinheiten, beispielsweise Getriebe- und/oder Generatoreinheiten, wobei die Energieerzeugungseinheiten über eine elektrische Verbindung (25) mit einer gemeinsamen Leistungselektronik (24) gekoppelt sind.

12. Strömungsenergieanlage nach einem der Ansprüche 8 bis 11, **gekennzeichnet durch** eine mechanische Kopplung mehrerer Module (M1, M2, M3, M4) auf eine gemeinsame Energieerzeugungseinheit, insbesondere eine gemeinsame Getriebe-und/oder Generatoreinheit.

13. Strömungsenergieanlage nach einem der Ansprüche 1 bis 10, **gekennzeichnet durch** eine Verwendung auf einem Schiff.

14. Strömungsenergieanlage nach Anspruch 13, **gekennzeichnet durch** eine Verwendung als Schiffsschornstein.

15. Strömungsenergieanlage nach einem der Ansprüche 1 bis 10, **gekennzeichnet durch** eine Verwendung als Werbesäule.
